# EUROPÄISCHE PATENTSCHRIFT

(11) **EP 1 210 510 B1**
(45) Veröffentlichungstag und Bekanntmachung des Hinweises auf die Patenterteilung: **21.07.2004**
(21) Anmeldenummer: 01911578.1
(22) Anmeldetag: 02.02.2001
(51) Int. Cl.: F02M 37/18, F02M 37/02

(54) **FÖRDEREINHEIT**
DELIVERY UNIT
UNITE DE REFOULEMENT

(30) Priorität: 02.02.2000 DE 10004357
(43) Veröffentlichungstag der Anmeldung: 05.06.2002
(73) Patentinhaber: SIEMENS AKTIENGESELLSCHAFT, 80333 München (DE)
(72) Erfinder: APPLETON, John, West Mids WS6 78X (GB)
(86) Internationale Anmeldenummer: PCT/EP2001/001106
(87) Internationale Veröffentlichungsnummer: WO 2001/057387

(56) Entgegenhaltungen:
- EP-A- 0 846 586
- DE-A- 19 816 689
- DE-A- 19 946 024
- FR-A- 2 765 632

## Beschreibung

Die Erfindung betrifft eine Fördereinheit für einen Kraftstoffbehälter, insbesondere für ein Kraftfahrzeug, mit einem Schwalltopf, einer Kraftstoffpumpe und einem der Kraftstoffpumpe vorgeschalteten Filter.

In Kraftstoffbehältern einzusetzende Fördereinheiten, mittels derer Kraftstoff aus dem Behälter zur Brennkraftmaschine des Kraftfahrzeugs gefördert wird, sind allgemein bekannt und somit Stand der Technik. Die in dem Schwalltopf angeordnete Kraftstoffpumpe saugt den Kraftstoff über den Filter aus dem Schwalltopf an. Mittels des Filters sollen Verunreinigungen im Kraftstoff gehindert werden, in die Kraftstoffpumpe und von dort bis zur Brennkraftmaschine zu gelangen.

Aus der DE 36 09 906 A1 ist ein derartiger Filter bekannt. Dieser besteht aus einem schlauchförmigen Filtergewebe, das mit einem Anschlußstutzen verbunden ist und über den der Filter am Einlaßstutzen der Kraftstoffpumpe befestigt ist. Der Filter ist bis zum Boden des Behälters geführt, so daß auch bei niedrigem Flüssigkeitspegel über einen Teil des Filtergewebes Kraftstoff von der Kraftstoffpumpe angesaugt werden kann. Um ein die Filterwirkung beeinträchtigendes Zusammenziehen des Filters infolge der Saugwirkung der Kraftstoffpumpe zu vermeiden, ist in das Filtergewebe ein Stützkörper eingelegt, der das Zusammenziehen des Filters verhindert.

Besonders nachteilig ist die aufwendige Fertigung des Filters. So bedingen das Einlegen des Stützkörpers, das Formgeben des Filtergewebes in seine Endform und das Verschweißen der Ränder des Filtergewebes eine Vielzahl von Arbeitsschritten. Hinzu kommt das Ausrichten des Filters bei der Montage im Behälter.

Der Erfindung liegt das Problem zugrunde, einen Filter für eine Kraftstoffpumpe der eingangs genannten Art zu schaffen, der eine bessere Filterleistung besitzt, einfach herzustellen und problemlos zu montieren ist.

Dieses Problem wird erfindungsgemäß dadurch gelöst, daß der Filter in den Schwalltopf der Fördereinheit integriert wird. Ein Teil des Schwalltopfes ist nunmehr Bestandteil des Filters, in dem er vom Filtergewebe abgedeckt ist. Dieser Teil des Schwalltopfes bildet somit das Filtergehäuse. Der entscheidende Vorteil besteht darin, daß die nutzbare Filterfläche vergrößert ist, was eine verbesserte Filterleistung mit sich bringt. Hinzu kommt, daß der Kraftstoff nunmehr auch infolge der Schwerkraft und nicht mehr ausschließlich aufgrund des Saugvermögens der Kraftstoffpumpe in den Filter gelangt. Infolge des Vermiedenes einer schlauchförmigen, geschlossenen Gestaltung des Filtergewebes ist die Herstellung des Filtergewebes wesentlich einfacher und damit kostengünstig.

In einer vorteilhaften Ausgestaltung bedeckt das Filtergewebe einen Teilbereich des Bodens des Schwalltopfes. Eine besonders zuverlässige Kraftstoffversorgung ist dann gewährleistet, wenn dieser Teilbereich der tiefste Bereich des Schwalltopfes ist. Der Teilbereich kann dabei stufenförmig oder nach außen gewölbt ausgebildet sein. Bei einem Schwalltopf ohne eine Öffnung im Boden, ist vorteilhafterweise der gesamte Boden mit dem Filtergewebe abgedeckt. Auf diese Weise erhält man eine besonders große Filterfläche.

Um ein Zusammenziehen des Filters zu verhindern, ist es vorteilhaft, Stützelemente zwischen Schwalltopf und Filtergewebe anzuordnen. Eine günstige Ausgestaltung ergibt sich, wenn diese Stützelemente, Rippen, mit dem Schwalltopf verbunden sind. Die Stützelemente können sowohl eingeklipst als auch angespritzt sein. In einer anderen Ausgestaltung sind die Stützelemente am Filtergewebe angeordnet, und stützen dieses gegen den Schwalltopf ab.

Die Befestigung des Filtergewebes innerhalb des Schwalltopfes gestaltet sich besonders einfach, wenn das Filtergewebe von einem Rahmen umgeben ist. Am Rahmen angeordnete Rastelemente ermöglichen eine besonders einfache Montage, wenn sie mit Raststellen im Schwalltopf verklipst werden. Eine noch einfachere Ausgestaltung mit einer wirksamen Abdichtung des Filtergewebes gegenüber dem Schwalltopf ergibt sich, wenn der Rahmen in eine im Schwalltopf angeordnete umlaufende Nut eingeklipst ist.

In einer anderen Ausgestaltung ist der Rahmen aus Kunststoff und in einer Aufnahme des Schwalltopfes eingesetzt. Infolge des Quellens des Kunststoffs verpreßt sich der Rahmen mit der Aufnahme, so daß die Dichtwirkung eintritt.

Ebenso ist es vorteilhaft, das Filtergewebe in den Schwalltopf einzulegen und mittels eines Halterings am Schwalltopf zu befestigen. In einer weiteren Ausgestaltung ist das Filtergewebe mit dem Schwalltopf verschweißt. Eine Abstützung mit gleichzeitiger Fixierung des Filtergewebes wird dadurch erreicht, daß die Stützelemente Raststellen aufweisen, in die am Filtergewebe angeordnete Rastelemente eingreifen.

Die Erfindung läßt zahlreiche Ausführungsformen zu und ist zur weiteren Verdeutlichung ihres Grundprinzips in den Zeichnungen dargestellt. Diese zeigen in:
- Figur 1: die Draufsicht auf einen Schwalltopf,
- Figur 2: ein Filtergewebe,
- Figur 3: das Filtergewebe im montierten Zustand,
- Figur 4: eine Seitenansicht des erfindungsgemäßen Filters,
- Figur 5, 6: Befestigungen des Filtergewebes am Schwalltopf.

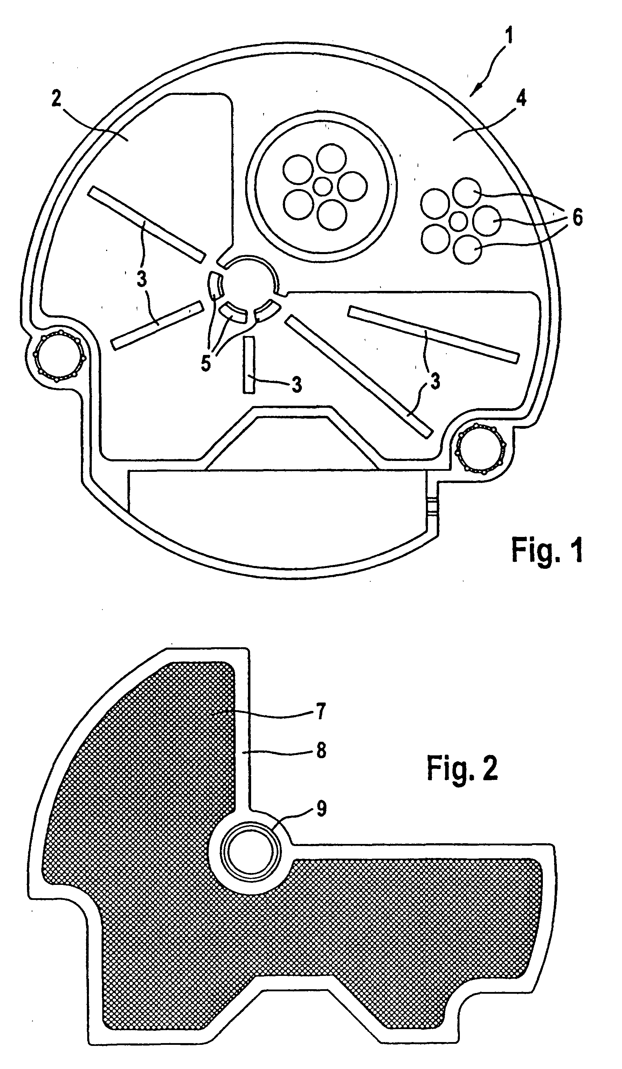

Figur 1 zeigt einen im Spritzgußverfahren hergestellten Schwalltopf 1. Der Teilbereich 2 bildet den tiefsten Bereich des Bodens. In diesem Teilbereich 2 sind aufrechtstehende Rippen 3 als Stützelemente angespritzt, die sich bis in eine Höhe erstrecken, die dem Niveau des Teilbereichs 4 entspricht. Ebenfalls am Schwalltopf 1 angeformte Elemente 5 dienen zur Aufnahme und Abstützung des Filters. Infolge der unterbrochenen Anordnung der Elemente 5 kann der Kraftstoff ungehindert bis in den Bereich des Ansaugstutzens fließen. Über Öffnungen 6 im Boden des Schwalltopfes 1 gelangt Kraftstoff aus dem nicht dargestellten Kraftstoffbehälter in den Schwalltopf 1.

Das Filtergewebe 7 gemäß Figur 2 besitzt eine an den Teilbereich 2 aus Figur 1 angepaßte Form. An seinem Umfang ist das Filtergewebe 7 mit Kunststoff umspritzt, so daß ein Rahmen 8 gebildet ist. Ein einstückig mit dem Rahmen angespritzter Anschlußstutzen 9 dient zur Verbindung des Filters mit der Kraftstoffpumpe.

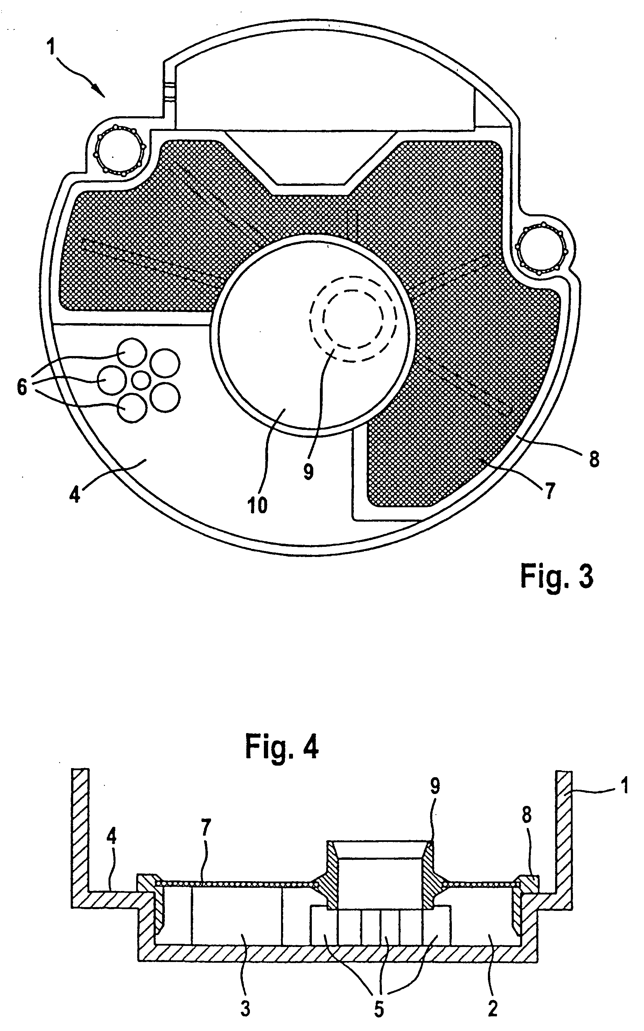

Figur 3 zeigt den Filter im montierten Zustand. Mittels einer Kraftstoffpumpe 10 wird der Kraftstoff zur Brennkraftmaschine gefördert. Der Rahmen 8 ist zur Abdichtung des Filters mit dem Rand des den Teilbereich 2 umgebenden Teilbereichs 4 verschweißt.

Der Filter in Figur 4 ist mit seinem Rahmen 8 in den Teilbereich 4 so eingelegt, daß das Filtergewebe 7 den Teilbereich 2 überdeckt. Durch Flüssigkeitsaufnahme des Kunststoffs bedingtes Quellen wird ein dichter Sitz gewährleistet. Der Anschlußstutzen 9 stützt sich auf den Elementen 5 ab, während die Stützelemente 3 ein Absinken des Filtergewebes 7 verhindern.

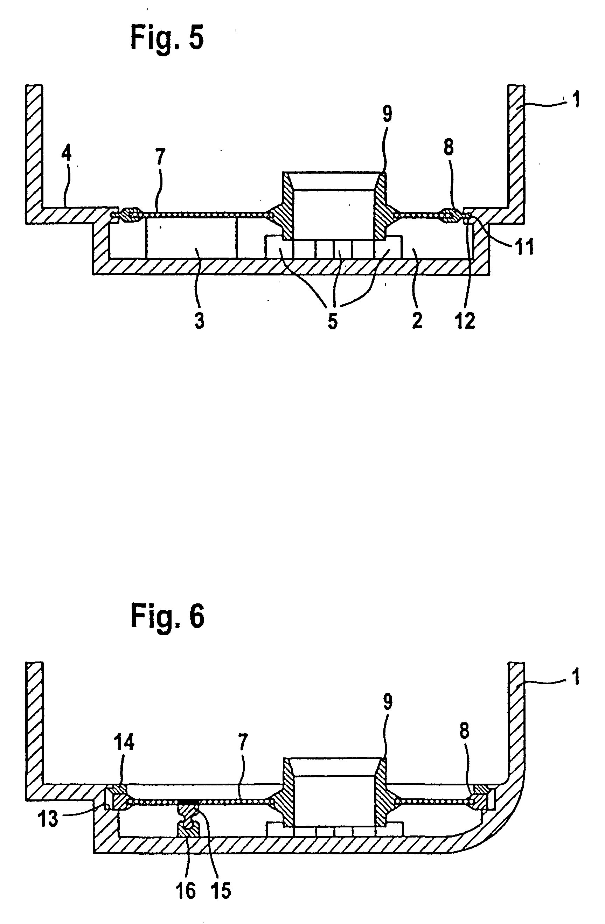

Die Befestigung des Filters ist in den Figuren 5 und 6 dargestellt. Der Rahmen 8 gemäß Figur 5 weist dabei ein umlaufendes Rastelement 11, zum Beispiel Haken, Wulst, auf, welches in einer am Rand des Teilbereichs 4 ebenfalls umlaufende Raststelle 12 zum Beispiel Nut, eingeschoben oder eingeklipst ist. Figur 6 zeigt eine andere Art der Befestigung. Das Filtergewebe 7 oder der Rahmen 8 wird auf eine umlaufende Auflagefläche 13 gelegt. Anschließend wird ein Haltering 14 montiert, der das Filtergewebe 7, beziehungsweise den Rahmen 8 in seiner Lage fixiert, und die Abdichtung bewirkt. Das Befestigen des Halterings 14 kann ebenfalls über seinen gesamten Umfang analog Figur 5 oder mittels einzelner Befestigungselemente erfolgen. Zusätzlich am Filtergewebe 7 angespritzte Rastelemente 15 fixieren und stützen im Zusammenwirken mit Rastelementen 16 das Filtergewebe gegenüber dem Teilbereich 2.

## Patentansprüche

1. Fördereinheit für Kraftstoff mit einer Kraftstoffpumpe und einem ein Filtergewebe aufweisenden Filter, wobei die Kraftstoffpumpe mindestens einen Einlaß und mindestens einen Auslaß besitzt und der im Schwalltopf angeordnete Filter mit dem Einlaß der Kraftstoffpumpe in Verbindung steht, **dadurch gekennzeichnet, daß** ein Teilbereich (2) des Schwalltopfes (1) Bestandteil des Filters ist und dieser Teilbereich (2) von dem Filtergewebe (7) abgedeckt ist.

2. Fördereinheit nach Anspruch 1, **dadurch gekennzeichnet, daß** der gesamte Bodenbereich (1) oder ein Teilbereich (2) des Bodens des Schwalltopfes (1) Bestandteil des Filters ist.

3. Fördereinheit nach Anspruch 1 und 2, **dadurch gekennzeichnet, daß** in dem vom Filtergewebe (7) abgedeckten Teilbereich (2) des Schwalltopfes (1) Stützelemente (3, 16) für das Filtergewebe (7) angeordnet sind.

4. Fördereinheit nach zumindest einem der vorhergehenden Ansprüche, **dadurch gekennzeichnet, daß** das Filtergewebe (7) von einem Rahmen (8) umgeben ist.

5. Fördereinheit nach Anspruch 4, **dadurch gekennzeichnet, daß** der Rahmen (8) mit dem Schwalltopf (1) verschweißt ist.

6. Fördereinheit nach Anspruch 4, **dadurch gekennzeichnet, daß** der Rahmen (8) und der vom Filtergewebe (7) abgedeckte Teilbereich (2) des Schwalltopfes (1) Rastelemente (11, 15) aufweist, mittels derer das Filtergewebe (7) im Schwalltopf (1) verklipst ist.

7. Fördereinheit nach Anspruch 4, **dadurch gekennzeichnet, daß** der Rahmen (8) in den Schwalltopf (1) eingelegt ist und mittels eines oder mehrerer Befestigungselemente (14) im Schwalltopf (1) befestigt ist.

## Claims

1. Feed unit for fuel, with a fuel pump and with a filter having a filter fabric, the fuel pump possessing at least one inlet and at least one outlet, and the filter arranged in the baffle being connected to the inlet of the fuel pump, **characterized in that** a part region (2) of the baffle (1) is an integral part of the filter and this part region (2) is covered by the filter fabric (7).

2. Feed unit according to Claim 1, **characterized in that** the entire bottom region (1) or a part region (2) of the bottom of the baffle (1) is an integral part of the filter.

3. Feed unit according to Claims 1 and 2, **characterized in that** supporting elements (3, 16) for the filter fabric (7) are arranged **in that** part region (2) of the baffle (1) which is covered by the filter fabric (7).

4. Feed unit according to at least one of the preceding claims, **characterized in that** the filter fabric (7) is surrounded by a frame (8).

5. Feed unit according to Claim 4, **characterized in that** the frame (8) is welded to the baffle (1).

6. Feed unit according to Claim 4, **characterized in that** the frame (8) and that part region (2) of the baffle (1) which is covered by the filter fabric (7) have latching elements (11, 15), by means of which the filter fabric (7) is snapped in the baffle (1).

7. Feed unit according to Claim 4, **characterized in that** the frame (8) is inserted into the baffle (1) and is fastened in the baffle (1) by means of one or more fastening elements (14).

## Revendications

1. Unité de refoulement pour du carburant, comprenant une pompe de carburant et un filtre pourvu d'un tissu filtrant, la pompe de carburant possédant au moins une entrée et au moins une sortie et le filtre situé dans le pot anti-désamorçage communiquant avec l'entrée de la pompe de carburant, **caractérisé en ce qu'**une zone partielle (2) du pot anti-désamorçage (1) fait partie du filtre et cette zone partielle (2) est couverte par le tissu filtrant (7).

2. Unité de refoulement selon la revendication 1, **caractérisée en ce que** la totalité de la zone de fond (1) ou une zone partielle (2) du fond du pot anti-désamorçage (1) fait partie du filtre.

3. Unité de refoulement selon la revendication 1 et 2, **caractérisée en ce que** des éléments de soutien (3, 16) pour le tissu filtrant (7) sont situés dans la zone partielle (2) du pot anti-désamorçage (1) couverte par le tissu filtrant (7).

4. Unité de refoulement selon au moins une des revendications précédentes, **caractérisée en ce que** le tissu filtrant (7) est entouré par un cadre (8).

5. Unité de refoulement selon la revendication 4, **caractérisée en ce que** le cadre (8) est soudé avec le pot anti-désamorçage (1).

6. Unité de refoulement selon la revendication 4, **caractérisée en ce que** le cadre (8) et la zone partielle (2) du pot anti-désamorçage (1) couverte par le tissu filtrant (7) sont pourvus d'éléments à encliqueter (11, 15) au moyen desquels le tissu filtrant (7) est clipsé dans le pot anti-désamorçage (1).

7. Unité de refoulement selon la revendication 4, **caractérisée en ce que** le cadre (8) est inséré dans le pot anti-désamorçage (1) et est fixé dans le pot anti-désamorçage (1) au moyen d'un ou de plusieurs éléments de fixation (14).
